(19) Europäisches Patentamt
European Patent Office
Office européen des brevets

(11) **EP 1 801 155 B1**

(12) **EUROPEAN PATENT SPECIFICATION**

(45) Date of publication and mention of the grant of the patent:
**09.12.2009 Bulletin 2009/50**

(51) Int Cl.:
***C08L 23/12*** *(2006.01)*     ***C08F 297/08*** *(2006.01)*

(21) Application number: **05028244.1**

(22) Date of filing: **22.12.2005**

(54) **Polypropylene composition comprising a propylene homopolymer component**

Polypropylenzusammensetzung enthaltend ein Propylenhomopolymer

Composition de polypropylène comprenant un homopolymère de propylène

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.06.2007 Bulletin 2007/26**

(73) Proprietor: **Borealis Technology Oy**
**06101 Porvoo (FI)**

(72) Inventors:
• **Vestberg, Torvald**
**06100 Porvoo (FI)**

• **Jääskeläinen, Pirjo**
**06150 Porvoo (FI)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 316 187     EP-A- 1 514 893**
**US-A- 4 551 501     US-A- 4 603 174**
**US-B1- 6 437 063     US-B1- 6 503 993**
**US-B1- 6 747 103**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention concerns a polypropylene composition, comprising at least one propylene homopolymer component, a method for preparing same, using a catalyst, suitable for the preparation of the polypropylene composition and the use of the polypropylene composition for the formation of polymeric articles, preferably films and thermoformed as well as molded articles.

## Description of prior art

Polypropylene compositions are known in the art. Polypropylene compositions comprising a propylene homopolymer component are in particular used for film applications. Such applications require a high degree of transparency of the polypropylene composition, in particular when the polypropylene composition in the form of a film is used for packaging application etc. In the art, it is well known in this respect to improve the optical properties of a polypropylene composition by adding nucleating agents, also designated clarifiers. The European patent application EP 1 514 893 A1, for example, discloses polypropylene blown films comprising nucleating agents, selected for example from phosphoric acid ester metal salts as well as polymeric nucleating agents, for example vinyl cycloalkane polymers. Similar nucleating agents are also disclosed in the international applications WO 99/24478 and WO 99/24479. The European patent application EP 0 316 187 A2 discloses a crystalline polypropylene homopolymer incorporated therein a polymer of a vinyl cycloalkane. The international application WO 2004/055101 discloses a heterophasic propylene copolymer, containing nucleating agents, selected from phosphate-derived nucleating agents, sorbitol-derived nucleating agents, metal salts of aromatic or aliphatic carboxylic acids as nucleating agents, polymeric nucleating agents, such as polyvinyl cyclohexane and inorganic nucleating agents, such as talc.

The US patent 4,551,501 finally discloses a crystalline propylene polymer composition comprising a blend of a crystalline polypropylene with a polymer of a vinyl cycloalkane. This US patent discloses that the polymer of the vinyl cycloalkane is introduced into the polymer composition using master batch technology.

In WO 2005026240 is disclosed a polypropylene based blown film which contains a clarifier containing phosphate-based alpha-nucleating agent and/pr polymeric alpha-nucleating agents. However, no example of the use of polymeric nucleating is disclosed.

Further polypropylene compositions are disclosed for example in US-A- 4 551 501 or US-A 4 603 174.

A drawback of the prior art compositions, however, is the fact that a sufficient transparency often cannot be obtained, in particular with polymeric nucleating agents. Approaches using the master batch technology often suffer from the drawback that it is very troublesome to incorporate by mechanical blending high amounts of nucleating agents with a satisfactory degree of evenness of the distribution into a polymer composition. On the other hand low molecular weight nucleating agents, such as sorbitol-derived nucleating agents, are relatively costly which is unfavourable, since high amounts thereof are often needed. Furthermore, such low molecular weight components may give rise to further problems during the lifetime of a manufactured product, such as migration, blooming etc., resulting in a deterioration of the product quality, with respect to the optical properties such as haze and transparency as well as with respect to physical properties.

## Object of the present Invention

Accordingly it is the object of the present invention to provide a further polypropylene composition overcoming the drawback associated with the prior art. In particular, the present invention aims at providing an advantageous polypropylene composition comprising at least one propylene homopolymer component, wherein satisfactory optical properties, in particular haze values and transparency can be obtained in a simple and reliable manner. In this respect, the present invention also aims at providing a suitable process for preparing a polypropylene composition satisfying the requirements as outlined above that uses a suitable catalyst therefor.

## Short description of the invention

The present invention solves the above-outlined object by providing a polypropylene composition as defined in claim 1. Preferred embodiments of the polypropylene composition are defined in sub-claims 2 to 13. Furthermore, the present invention provides a process for producing a polypropylene composition as defined in claims 14 to 18 and also the use as defined in claim 19.

## Detailed description of the invention

The polypropylene composition in accordance with the present invention comprises at least one propylene homopolymer component.

The modality with respect to molecular weight distribution and thus with respect to melt flow ratio is not critical. Thus the polypropylene composition in accordance with the present invention may be unimodal or multimodal including bimodal with respect to molecular weight distribution. In preferred embodiments of the present invention at least two propylene homopolymer components are present.

The mixture of A) and B) as defined in claim 1 has a $MFR_2$ of from 0.1 to 50 g/10 min (determined using ISO 1133, at 230°C, 2.16 kg load), preferably the $MFR_2$ is $\leq$ 25 g/10 min, and in some embodiments $\leq$ 15 g/10 min, or $\leq$ 10 g/10 min, preferably the $MFR_2$ is $\geq$ 1 g/10 min, preferably $\geq$ 2 g/10 min. In some embodiments, in particular when the at least one propylene homopolymer component is a unimodal propylene homopolymer component, the $MFR_2$ may be in the range of from 7.5 to 12 g/10 min, preferably from 8 to 11 g/10 min, while with bimodal propylene homopolymer components the $MFR_2$ in some embodiments of the present invention is in the range of from 2 to 10 g/10 min.

The polypropylene composition in accordance with the present invention is preferably multimodal, at least bimodal with respect to the molecular weight distribution concerning the propylene homopolymer components. In accordance with the present invention, this embodiment can be realized by including two different propylene homopolymer components, differing at least with respect to the $MFR_2$.

Such an embodiment is one preferred embodiment of the present invention. Such an embodiment may be exemplified by a mixture of a lower molecular weight component with a higher molecular weight component. The lower molecular weight (LMW) component has a higher $MFR_2$ than the higher molecular weight (HMW) component. The amount of the LMW component is typically between 30 to 70 wt%, preferably 40 to 60 wt% of the total amount of propylene homopolymer. The amount of the HMW component is typically between 30 to 70 wt%, preferably 40 to 60 wt% of the total amount of propylene homopolymer.

In multimodal, e.g. bimodal, embodiments, the ratio between the $MFR_2$ of LMW component and $MFR_2$ of HMW component is typically from 1 up to 400, preferably at least 20, more preferably at least 30, such as at least 40. The upper limit of said ratio may be preferably up to 200. Other embodiments with lower ratios are, however, also envisaged by the present invention.

The at least one propylene homopolymer component preferably has a shear thinning index $SHI_{0/50}$ of > 4, with the upper limit being about 50, preferably $\geq$ 8. A suitable range is in particular from 8 to 30.

In accordance with the present invention, it is furthermore preferred when the polypropylene composition has a tensile modulus of below 2500 MPa, for example, suitably from 1500 to 2500 MPa.

The polypropylene composition in accordance with the present invention shows preferably a polydispersity index (PI) of $\geq$ 2.5, preferably $\geq$ 4. A suitable upper limit for the polydispersity index is about 10, so that a suitable range in accordance with the present invention is, for example, from 4 to 8.

The polypropylene composition in accordance with the present invention furthermore, in embodiments, comprises a xylene soluble fraction of below 3 wt%, based on the polymeric components of the polypropylene composition.

Furthermore, preferably the polypropylene composition in accordance with the present invention has a molecular weight distribution, MWD, as calculated from $M_w/M_n$ values obtained from the size exclusion chromatography (SEC, also known as GPC) of preferably up to 20, in particular $\geq$ 3, for example 5 to 20 and in embodiments from 7 to 18 or from 10 to 15.

The polypropylene composition in accordance with the present invention is furthermore characterized in that it comprises a polymeric nucleating agent. Any known polymeric nucleating agent may be employed including polymers of vinyl alkanes and vinyl cycloalkanes. A preferred example of such a polymeric nucleating agent is a vinyl polymer, such as a vinyl polymer derived from monomers of the formula

$$CH_2 = CH\text{-}CHR_1R_2$$

wherein $R_1$ and $R_2$, together with the carbon atom they are attached to, form an optionally substituted saturated or unsaturated or aromatic ring or a fused ring system,

wherein the ring or fused ring moiety contains four to 20 carbon atoms, preferably 5 to 12 membered saturated or unsaturated or aromatic ring or a fused ring system or independently represent a linear or branched C4-C30alkane, C4-C20cycloalkane or C4-C20aromatic ring. Preferably $R_1$ and $R_2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The polymeric nucleating agent usually is present in the final product in an amount of from more than 20 ppm, typically more than 45 ppm, (based on the weight of the polypropylene composition). Preferably this agent is present in the polypropylene composition in a range of from 50 to 1000 ppm, more preferably more than 100 ppm, such as 200 to 800 ppm.

The use of the polymeric nucleating agent in accordance with the present invention enables the preparation of polypropylene compositions having highly satisfactory optical properties and satisfactory mechanical properties, so that it is not required for the compositions in accordance with the present invention to contain low molecular weight nucleating agents, in particular costly sorbitol-derived nucleating agents. Accordingly, the present invention provides an alternative means for improving the transparency of propylene copolymer compositions, especially in end applications wherein the use of low molecular weight nucleating agents as clarifiers is not desirable, such as in many medical and food applications with strict purity requirements and regulations.

Moreover, the present invention achieves highly advantageous haze values of the polypropylene composition as defined herein using relatively low amounts of polymeric nucleating agents. The low molecular weight nucleating agents require usually higher amounts to obtain comparable results in transparency.

As defined in claim 1 of the present application, the polypropylene composition in accordance with the present invention comprising the essential components as defined above, i.e. the at least one propylene homopolymer component A) and the polymeric nucleating agent B), enables the preparation of polypropylene compositions giving rise to compositions having a haze, measured in the form of an injection molded test piece having a thickness of 2 mm (test method identified below) satisfying the following relation:

$$\text{Haze (\%)} < 105.7 \cdot N^{(-0.1)} + 13.6 \cdot MFR_2^{0.6} - 1.78 \cdot MFR_2 - 31.7$$

with

N = amount of polymeric nucleating agent in the propylene homopolymer in ppm (weight)

$MFR_2$ = $MFR_2$ of the mixture of A) and B), determined as defined in claim 1.

Preferably N is from 45 to 1000. Preferably $MFR_2$ is from 1 to 50 g/10 min. For each of the two ranges illustrated above the further preferred embodiments as derivable from the present specification likewise apply.

The polymeric nucleating agent preferably is PVCH.

The polypropylene composition in accordance with the present invention may be prepared by any suitable process, including in particular blending processes such as mechanical blending including mixing and melt blending processes and any combinations thereof as well as in-situ blending during the polymerisation process of the propylene polymer component(s). These can be carried out by methods known to the skilled person, including batch processes and continuous processes.

It is also possible to prepare the polypropylene composition in accordance with the present invention by sequential polymerization processes, wherein the single components of the polypropylene composition are prepared, one after the other, in the presence of the already prepared components. Such a process for preparing the polypropylene composition is preferred and yields a reactor blend or reactor made polymer composition, which means herein the reaction product obtained from a polymerization reaction wherein, for example, the propylene homopolymer component is polymerized in the presence of the polymeric nucleating agent.

The reactor made polymer composition (in-situ blend) defines a different embodiment compared to a mechanical blend of a polymer with a nucleating agent, wherein the polymer is first produced in the absence of a polymeric nucleating agent and is then blended mechanically with the polymeric nucleating agent or with a small amount of nucleated polymer (so-called master batch technology) in order to introduce the polymeric nucleating agent into the polymer mixture. The preparation of a reactor made polymer composition ensures the preparation of a homogenous mixture of the components, for example a homogenously distributed polymeric nucleating agent in the polypropylene composition, even at high concentrations of polymer nucleating agent. As outlined above, the reactor made polymer composition is a preferred embodiment of the present invention, although also mechanical blends prepared, for example, by using master batch technology are envisaged by the present invention.

Similar considerations also apply with respect to the preparation of multimodal including bimodal polypropylene compositions, in particular the compositions comprising two different propylene homopolymer components with differing $MFR_2$ values. While such multimodal or bimodal components may also be prepared by mechanical blending processes, it is preferred in accordance with the present invention to provide such multimodal or bimodal compositions in the form of a reactor made compositions, meaning that the second (or any further) component is prepared in the presence of the first component (or any preceding components).

A suitable process for preparing reactor made compositions is outlined below.

The propylene homopolymer component to be employed in accordance with the present invention in principle can be prepared by any polymerization method, including solution, slurry and gas phase polymerization. Slurry polymerization preferably designates a bulk polymerization. Bulk polymerization defines a polymerization in a reaction medium comprising at least 60 wt% monomer.

In accordance with a preferred embodiment of the present invention, the polypropylene composition comprises two different propylene homopolymer components, preferably differing in particular with respect to $MFR_2$. Such a mixture of two propylene homopolymer components preferably may be produced in accordance with the present invention in a multistage process using one or more polymerization reactors, which may be the same or different, for example, at least slurry-slurry, gas phase-gas phase or any combination of slurry and gas phase polymerization. Each stage may be effected in parallel or sequentially using same or different polymerization methods. Advantageously, the above-mentioned mixture of the two different propylene homopolymer components is prepared in a sequence comprising at least one slurry polymerization and at least one gas phase polymerization. Suitably, the slurry polymerization is the first polymerization step, followed by a gas phase polymerization. This order, however, may also be reversed. In the case of such a sequential polymerization reaction, each component may be produced in any order by carrying out the polymerization in each step, except the first step, in the presence of the polymer component formed in the preceding step. Preferably, the catalyst used in the preceding step is also present in the subsequent polymerization step. Alternatively, it is also possible to add additional quantities of the identical catalyst or of a different catalyst in a subsequent polymerization step.

A suitable possibility of forming a multimodal propylene homopolymer component is a polymerization sequence comprising a first polymerization step in a slurry reactor, preferably a loop reactor, followed by a polymerization step in a gas phase reactor, wherein the second propylene homopolymer component is prepared in the presence of the already prepared first propylene homopolymer component (prepared in the slurry reactor).

A preferred multistage process is the above-identified slurry-gas phase process, such as developed by Borealis and known as the Borstar® technology. In this respect, reference is made to the European applications EP 0 887 379 A1 and EP 517 868 A1, incorporated herein by reference.

In the case of multimodal compositions, at least with respect to the molecular weight distribution or MFR, the composition comprises a low molecular weight component (LMW) and a higher molecular weight component (HMW). The LMW component and the HMW component are made in different steps in any order. Preferably, typically when a Ziegler-Natta catalyst is used, the HMW fraction is produced in the first step and the LMW fraction is produced in the subsequent step, in the presence of the HMW fraction.

In case of the unimodal polypropylene homo polymer the homo polymer is unimodal with respect to MWD, whereby the polymer can be polymerised e.g. in a single stage batch or preferably continuous process. The process can be a slurry or gas phase, preferably a slurry, such as loop, process. Alternatively, the unimodal polymer may be produced in a multistage process using at each stage process conditions which result in similar polymer properties.

Optionally, the unimodal or multimodal processes can further comprise a prepolymerisation step preceding the polymerization of above mentioned propylene polymer component(s) in a manner known in the field.

One example of a suitable sequential polymerization method for preparing multimodal, including bimodal compositions as exemplified above, is a process employing first a slurry reactor, for example a loop reactor, followed by a second polymerization in a gas phase reactor. Such a reaction sequence provides a reactor blend of different propylene homopolymers for which the $MFR_2$ values can be adjusted as, in principle, known to the skilled person during the sequential polymerization steps. It is of course possible and also envisaged by the present invention to carry out the first reaction in a g as phase reactor while the second polymerization is carried out in a slurry reactor, for example a loop reactor. The process as discussed above, comprising at least two polymerization steps, is advantageous in view of the fact that it provides easily controllable reaction steps enabling the preparation of a desired reactor blend of propylene homopolymers. The polymerization steps may be adjusted, for example, by appropriately selecting monomer feed, hydrogen feed, temperature, pressure, type and amount of catalyst, in order to suitably adjust the properties of the polymerization products obtained.

Such a process can be carried out using any suitable catalyst for the preparation of propylene monomers, including single site catalyst, including metallocenes and non-metallocenes, and Ziegler-Natta. Preferably, the process as discussed above is carried out using a Ziegler-Natta catalyst, in particular a high yield Ziegler-Natta catalyst (so called fourth a nd fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

Preferred external donors a re the known silane-based donors, preferably dicyclopentyl dimethoxy silane or cyclohexyl methyldimethoxy silane.

An alternative to such multistage, multi-reactor processes is the preparation of a multimodal polymer component in one reactor as known to the skilled person. In order to produce a multimodal polymer composition, the skilled person in particular can control the reaction by changing polymerization conditions, using different types of catalyst and using different hydrogen feeds.

With respect to the above-mentioned preferred slurry-gas phase process, the following general information can be provided with respect to the process conditions.

Temperature of from 40°C to 110°C, preferably between 60 °C and 100°C, in particular between 70°C and 90°C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

In a further preferred embodiment of the present invention, the polymeric nucleating agent is introduced into the polypropylene composition by means of a suitably modified catalyst, i.e. the catalyst to be used in catalysing the polymerisation of the propylene homopolymer is subjected to a polymerisation of a suitable monomer for the polymeric nucleating agent to produce first said polymeric nucleating agent. The catalyst is then introduced together with the obtained polymeric nucleating agent to the actual polymerisation step of the propylene homopolymer component(s).

In a particularly preferred embodiment of the present invention, the propylene homopolymer is prepared in the presence of such a modified catalyst to obtain said reactor made popypropylene composition. With such modified catalyst, it is also possible to carry out the above-identified preferred polymerization sequence for the preparation of in-situ blended multimodal, including bimodal, propylene homopolymers.

A preferred polypropylene composition in accordance with the present invention accordingly is obtainable by preparing a propylene homopolymer in the presence of a modified catalyst, wherein the modified catalyst is obtainable by polymerizing a vinyl compound having the formula

$$CH_2 = CH\text{-}CHR_1R_2$$

wherein $R_1$ and $R_2$ are as defined previously herein, at a weight ratio of the vinyl compound to polymerization catalyst of two or more, in the presence of said catalyst, until the concentration of unreacted vinyl compound is less than about 0.5 wt%, preferably less than 0.1 wt%.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

In this respect, the present invention furthermore provides a catalyst, suitable for the preparation of polypropylene compositions, wherein the polymerization catalyst is obtainable by polymerizing a vinyl compound of the formula

$$CH_2 = CH\text{-}CHR_1R_2$$

wherein $R_1$ and $R_2$ are as defined herein, at a weight ratio of the vinyl compound to polymerization catalyst amounting to 2 or more, in the presence of said catalyst, until the concentration of unreacted vinyl compound is less than about 0.5 wt%, preferably less than 0.1 wt%.

The preferred embodiments as described previously in the present application with respect to the vinyl compound also apply with respect to the polymerization catalyst of the present invention and the preferred polypropylene composition in accordance with the present invention.

The weight ratio of vinyl compound to polymerization catalyst in the modification step of the polymerization catalyst preferably is 3 or more, in particular 3.5 to 50, preferably 4.0 to 40, such as 5.0 to 15.

General conditions for the modification of the catalyst, suitable catalyst, co-catalyst, donors, liquid media and process parameters are also disclosed in WO 00/68315, incorporated herein by reference with respect to the modification of the polymerization catalyst. In the present invention preferably, increased ratio of VCH:catalyst is used. Suitable media for the modification step include, in addition to oils, also aliphatic inert organic solvents with low viscosity, such as pentane and heptane. Furthermore, small amounts of hydrogen can be used during the modification.

Suitable catalyst components for the catalyst of the present invention are all types of catalysts known for the preparation of propylene polymers, including single site catalyst, including metallocenes and non-metallocenes, and Ziegler-Natta. Preferred herein are Ziegler-Natta catalysts, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference. Further suitable examples are the catalysts as employed in the examples shown in the present application, comprising a Ti based metal component, an Al based co-catalyst and a silane based donor.

Preferred external donors are the known silane-based donors, preferably dicyclopentyl dimethoxy silane or cyclohexyl methyldimethoxy silane.

As already discussed above, the present invention provides an improved polypropylene composition including at least one propylene homopolymer component and a polymeric nucleating agent, with improved optical properties, in particular improved haze values. In embodiments, the present invention provides polypropylene compositions as defined above having a haze, measured in the form of an injection molded test piece having a thickness of 2 mm, of below 60%, in embodiments 50% and even below 40%.

With decreasing MFR the transparency can typically further be increased. Thus In another embodiment, preferable for films and/or for thermoforming, the mixture of A) and B) has $MFR_2$ of $\leq 8$ g/10 min and haze of below 55%.

In a still further embodiment, preferable for films and/or for thermoforming, the mixture of A) and B) has a $MFR_2$ of $\leq 4$ g/10 min and haze of below 45%.

For the two embodiments outlined above it is further preferred when the amount of polymeric nucleating agent, preferably PVCH, amounts to more than 45, more preferably more then 50 ppm, and in embodiments more than 100 ppm, such as from 200 to 800 ppm.

The invention enable to provide a polypropylene composition with of high crystallinity (due to high isotacticity) and good processability (e.g. out-put) together with high transparency. This very feasible property balance is not obvious in view of the prior art.

Further unexpectedly, the amount of the polymeric nucleating agent can be varied for adjusting the transparency of the polypropylene composition of the invention without any marked changes in the stiffness properties of the polymer.

In particularly preferred embodiments of the present invention, the propylene homopolymer component is prepared using a modified catalyst which already comprises the polymeric nucleating agent, whereby very even distributions of the polymeric nucleating agent can be achieved in the polypropylene composition, so that, relatively, small amounts of nucleating agent are sufficient in order to achieve the desired haze values.

The polypropylene composition in accordance with the present invention may also comprise additional polymer component(s), e.g. propylene component(s), including propylene copolymers, in particular copolymers with ethylene and also heterophasic propylene compositions, wherein the above defined propylene homopolymer is comprised in a so called matrix phase wherein an elastomeric copolymer of propylene and a comonomer, preferably at least ethylene is dispersed as a dispersed (rubber) phase.

Preferably, no disperse phase of elastomeric ethylene copolymer is present in the polypropylene composition.

The polypropylene composition in accordance with the present invention may be used for the manufacture of molded and extruded articles, for example articles produced by injection molding, compression molding, thermoforming, blow molding or foaming. The polypropylene composition in accordance with the present invention is very suitable for preparing films and sheets. Said composition may also be used for the manufacture of cups, pails, bottles, containers, boxes, automotive parts, appliances, technical articles, caps, closures and lids as well as for preparing pipes, tubes, cables etc. In particular, the polypropylene compositions in accordance with the present invention are suitable for film and sheet applications.

The polypropylene composition in accordance with the present invention may be provided in the form of powder, fluff, spheres and pellets. In particular, when the polypropylene composition in accordance with the present invention is provided in the form of a reactor made composition the product is usually present in the form of powder, fluff or spheres. These compositions may be blended, compounded and pelletized further prior to the end application using conventional additional components, such as additives, fillers and reinforcing agents. Suitable additives include antioxidants, acid scavengers, antistatic agents, flame retardants, light and heat stabilizers, lubricants, nucleating agents, clarifying agents, pigments and other coloring agents, including carbon black. Fillers such as talc, mica and wollastonite can also be used.

Furthermore the properties of the polypropylene composition of the present invention may be modified further, for example by subjecting a reactor made composition to further processing steps, prior or following the compounding as exemplified above, such as post reactor chemical modification of the $MFR_2$ of the polymer (visbreaking) using for example peroxides for increasing $MFR_2$.

**Definitions and determination methods in claims, above description and below examples**

**The xylene solubles (XS, wt%):** analysis according to the known method: 2.0 g of polymer was dissolved in 250 ml p-xylene at 135°C under agitation. After $30 \pm 2$ minutes the solution was allowed to cool for 15 minutes at ambient temperature and then allowed to settle for 30 minutes at $25 \pm 0.5$°C. The solution was filtered and evaporated in nitrogen flow and the residue dried under vacuum at 90°C until constant weight is reached.

$$XS\% = (100 \times m_1 \times v_0) / (m_0 \times v_1),$$

wherein

$m_0$ = initial polymer amount (g)

$m_1$ = weight of residue (g)

$v_0$ = initial volume (ml)

$V_1$ = volume of analyzed sample (ml)

**MFR$_2$** is measured in accordance with ISO 1133 (230°C, 2.16 kg load).

**Mw, Mn, MWD:** The determination of weight average molecular weight (Mw) and number average molecular weight (Mn) and the molecular weight distribution (MWD = Mw/Mn) by size exclusion chromatograhy (SEC): Mw, Mn and MWD (Mw/Mn) were determined with A Millipore Waters ALC/GPC operating at 135 °C and equipped with two mixed bed and one $10^7$ A TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes. Reference is also made to ISO 16014.

**Melting temperature, crystallization temperature and degree of crystallinity** are measured with a Mettler TA820 differential scanning colorimetry device (DSC) on $3 \pm 0.5$ mg samples. Crystallization and melting temperatures are obtained during 10°C/min cooling and heating scans between 30°C and 225°C. Melting and crystallization temperatures were taken as the peaks of endotherms and exotherms. The degree of crystallinity is calculated by comparison with the heat or fusion of a perfectly crystalline polypropylene, i.e. 209 J/g.

**Flexural modulus** is measured according to ISO 178 (room temperature, if not otherwise mentioned), by using injection molded test specimens as described in EN ISO 1873-2 (80 x 10 x 4 mm). In case of bench scale tests of examples 1 to 4 and comparative examples 1 and 2 the flexural modulus was measured according to above ISO 178 (room temperature), except samples were injection moulded to plates (60x60x2 mm) and test bars (60x10x2 mm) for measurement were cut out from the plates in flow direction.

**Charpy notched impact** is measured according to ISO 179 (room temperature, 23°C if not otherwise mentioned) using injection molded test specimen as described in EN ISO 1873-2 (80 x 10 x 4 mm).

**Tensile strength, including tensile stress at yield and strain at yield**, is measured according to ISO 572-2 (cross head speed 50 mm/min). **Tensile modulus** is measured according to ISO 572-2 (cross head speed 1 mm/min).

**Haze and transparency** are determined from 2 mm injection molded plaque samples according to ASTMD 1003.

**Rheology:** Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (IS06721-1)

The values of storage modulus (G'), loss modulus (G"), complex modulus (G*) and complex viscosity ($\eta^*$) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad \text{and} \quad \eta'' = G' / \omega$$

$$f'(\omega) = G''(\omega) \cdot \omega / [G'(\omega)^2 + G''(\omega)^2]$$

$$f''(\omega) = G'(\omega) \cdot \omega / [G'(\omega)^2 + G''(\omega)^2]$$

- **The polydispercity index, PI,** is calculated from cross-over point of G'($\omega$) and G"($\omega$).
  There is a linear correlation between f' and f" with zero ordinate value of $1/\eta_0$ (Heino et al.[1])
  For polypropylene this is valid at low frequencies and five first points (5 points/decade) are used in calculation of $\eta_0$.
- **Elasticity indexes (G') and shear thinning indexes (SHI),** which are correlating with MWD and are independent of MW, were calculated according to Heino [1,2] (below).
  **SHI** is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

> 1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

> 2) The influence of molecular structure on some rheological properties of polyethylene. Heino, Eeva-Leena. Borealis Polymers Oy, Porvoo, Finland. Annual Transactions of the Nordic Rheology Society, 1995

The following examples illustrate the invention.

Example 1

All raw materials were essentially free from water and air and all material additions to the reactors and the different steps were done under inert conditions.

200 ml Ondina oil 68 was added to a 1 litre glass reactor and heated to 85 °C and kept there for two hours while purging with nitrogen. While keeping about 0,5 bar nitrogen pressure in the reactor the temperature was decreased to 15 °C and 7,3 ml triethyl aluminium (100 %), 1,6 ml dicyclopentyl dimethoxy silane and 15,1 g highly active and stereospecific Ziegler Natta catalyst (ZN catalyst) was added. Al/Ti and Al/Do molar ratio was 8,0o. The ZN catalyst was made according to Finnish patent No. 88047, and had Ti content 2,1 w-%. 53 g vinyl cyclohexane (VCH) (corresponds to VCH/catalyst weight ratio 3,5) was added during 29 minutes. The temperature was increased to 85 °C and kept there for 20 hours. 25 ml heated (85 °C) and nitrogen purged White Protopet wax was added. Finally the reactor was cooled to about 30 °C and samples of the VCH modified catalyst were taken for polymerization tests and for determining unreacted VCH content with gas chromatography.

Polymerization of propylene with the VCH modified catalyst was done in a 5 litre reactor with stirrer. 0,202 ml TEA (=Al/Ti molar ratio 250), 0,034 ml dicyclopentyl dimethoxy silane donor (=Al/Do molar ratio 10) and 30 ml pentane were mixed and allowed to react for 5 minutes. Half of the mixture was added to the reactor and the other half was mixed with 184 mg of the catalyst/oil/wax mixture. After 10 minutes the catalyst/oil/wax/TEA/dicydopentyl dimethoxy silane donor/pentane mixture was added to the reactor. 550 mmol hydrogen and 1400 gram propylene were added into the reactor and the temperature was raised to 80 °C within 20 minutes while mixing. The reaction was stopped after 1 hour at 80 °C by flashing out unreacted propylene.

The polymer powder was stabilised with 1500 ppm Irganox B215 and 500 ppm Calcium stearate and pelletized and injection moulded into plates. Haze was measured from the plaques and flexural modulus was measured on pieces cut from the plaques a nd the other analyses were done on pellets. Haze was 74,7 % and the other results are shown in Table 1.

Example 2

VCH modification in this example was done in the same way as in example 1, but the VCH amount was increased to VCH/catalyst weight ratio 5,0. VCH modification was done with Al/Ti and Al/Do molar ratio was 6, 15 mmol hydrogen and modification temperature was 65 °C. Polymerisation was done as in example 1. Haze was 75,2% and the other results are seen in Table 1.

Example 3

VCH modification in this example was done in the same way as in example 1, but the VCH amount was increased to VCH/catalyst weight ratio 10,0. VCH modification was done in pentane with Al/Ti and Al/Do molar ratio was 6, 15 mmol hydrogen and modification temperature was 65 °C. Polymerisation was done as in example 1. Haze was 63,7 % and the other results are seen in Table 1.

Example 4

VCH modification in this example was done in the same way as in example 1, but the VCH amount was increased to VCH/catalyst weight ratio 20,0. VCH modification was done in pentane with Al/Ti and Al/Do molar ratio was 6,5, 8 mmol hydrogen and modification temperature was 65 °C. Polymerisation was done as in example 1. Haze was 59,8 % and the other results are seen in Table 1.

Comparative example 1

This example was done according to example 1, with the exception that the VCH/catalyst weight ratio was only 0,8, Al/Ti and Al/Do molar ratio 3, and modification temperature 55 °C. Polymerisation was done as in example 1. Haze was 92 % and the other results are seen in Table 1.

Comparative example 2.

This example was done according to example 1, with the exception that the VCH/catalyst weight ratio was only 2,0, Al/Ti and Al/Do molar ratio 4,5, and modification temperature 55 °C. Polymerisation was done as in example 1. Haze was 87,8 % and the other results are seen in Table 1.

Table 1 :

Table 1

| | | Ex 1 | Ex 2 | Ex 3 | Ex 4 | Comp ex 1 | Comp ex 2 |
|---|---|---|---|---|---|---|---|
| **VCH modification** | | | | | | | |
| VCH/catalyst | weight ratio | 3,5 | 5 | 10 | 20 | 0,8 | 2 |
| **Polymerisation** | | | | | | | |
| Catalyst amount (as dry) | mg | 13,5 | 20,3 | 15,7 | 17,8 | 11,8 | 9,2 |
| Activity | kgPP/gcath | 47 | 32 | 32 | 32 | 65 | 82 |
| PolyVCH in polymer | ppm | 74 | 156 | 313 | 625 | 12 | 24 |
| **Polymer** | | | | | | | |
| $MFR_2$ | g/10min | 12,2 | 14,2 | 12,9 | 12,3 | 13,7 | 18,1 |
| XS | w-% | 1,2 | 1,3 | 1,1 | 1,2 | 1 | 1,1 |
| Melting point | °C | 166,4 | 166,2 | 167 | 167,3 | 166,4 | 166,2 |
| Crystallisation point | °C | 127,9 | 128,5 | 131,7 | 131,7 | 127,8 | 128,7 |
| Haze, 2 mm | % | 74,7 | 75,2 | 63,7 | 59,8 | 92 | 87,8 |
| Flexural modulus | MPa | 2120 | 1960 | 2140 | 2070 | 2040 | 2090 |

**Examples 6 to 8 and Comparative Example 3 (TF)**

The examples 6 to 8 and Comparative Example 3 were prepared in a continuous multistage process in pilot scale comprising a loop reactor and a fluidised bed gas phase reactor as follows:

The catalyst used was a highly active, stereospecific transesterified $MgCl_2$-supported Ziegler-Natta catalyst prepared analogously to Example 1. The catalysts are further characterized in Table 2. The catalyst was modified with VCH as disclosed in Example 1, except that the weight ratio of VCH:catalyst was 10:1 and the modification was carried out in pentane. The catalyst for Comparative Example 3 and 4 was modified with VCH as disclosed in Example 1, except that the weight ratio of VCH:catalyst was 1:1. Triethyl aluminium was used as a cocatalyst with Al/Ti molar ratio of 200.

The catalyst was prepolymerised in a known manner in the presence of propylene and the co-catalyst in a separate prepolymerisation step. Then propylene, and hydrogen were fed together with the prepolymerised catalyst into the loop reactor which operated as a bulk reactor at conditions given in Table 2 (production of loop fraction). Then the polymer slurry stream was fed from the loop reactor into the gas phase reactor and more propylene and hydrogen were fed in the gas phase reactor (production of the gas phase reactor fraction in the presence of the loop-fraction to obtain the matrix component). The polymerisation conditions therein are given in Table 2. These examples are representative for TF applications.

Table 2

| Sample | | Example 5 | Example 6 | Comp example 3 |
|---|---|---|---|---|
| VCH/catalyst | weight ratio | 10 | 10 | 1 |
| Donor | | Dicyclopentyl dimethoxy silane | Dicyclopentyl dimethoxy silane | Dicyclopentyl dimethoxy silane |
| Al/donor ratio | mol/mol | 5,0 | 7,2 | 5,0 |
| Loop | | | | |
| Temperature | °C | 85 | 80 | 85 |
| Split | % | 44,5 | 49,4 | 59 |
| MFR2 | g/10 min | 0,67 | 0,66 | 0,46 |
| XS | % | 2,1 | 1,5 | 1,7 |
| | | | | |
| GPR | | | | |
| Temperature | °C | 85 | 85 | 85 |
| Split | % | 55,5 | 50,6 | 41,0 |
| MFR2 | g/10 min | 3,1 | 2,6 | 3,8 |
| XS | % | 2,0 | 1,3 | 1,2 |
| | | | | |
| **Pellets** | | | | |
| MFR | g/10 min | 3,1 | 2,6 | 3,5 |
| Zero viscosità | Pa*s | 16311 | 12617 | 15777 |
| SHI | | 13,8 | 12,3 | 21,4 |
| PI | | 5,1 | 4,8 | 6,2 |
| Tm | °C | 167,0 | 167,2 | 166,6 |
| cryst. | % | 56,0 | 56,7 | 55,6 |
| Tcr | °C | 132,1 | 133,3 | 129,6 |
| | | | | |
| Tensile Modulus | MPa | 1970 | 1950 | 1950 |
| Stress at yield | MPa | 39,8 | 40 | 39,8 |
| Strain at yield | % | 7,5 | 6,9 | 7,0 |
| Charpy at RT | kJ/m$^2$ | 4,5 | 4,8 | 4,8 |
| Haze 2 mm plaques | % | 42,0 | 39 | 59 |

(continued)

| Pellets | | | | |
|---|---|---|---|---|
| Gloss 2mm plaques | | 82,0 | 77,6 | 86,2 |
| PVCH | ppm | 757 | 474 | 42 |
| Formulation | | | | |
| Irganox B215 | ppm | 2000 | 2000 | 2000 |
| SHT | ppm | 200 | 200 | 200 |

Additional examples were prepared in a similar manner, representing cast film examples. The results are given in Table 3.

**Table 3**

| Sample | | Example 7 | Example 8 | Example 9 | Comp. Ex. 4 |
|---|---|---|---|---|---|
| VCH/catalyst | weight ratio | 10 | 10 | 10 | 1 |
| Donor type | | Dicyclopentyl dimethoxy silane | Dicyclopentyl dimethoxy silane | Dicyclopentyl dimethoxy silane | Dicyclopentyl dimethoxy silane |
| Al/donor ratio | mol/mol | 5 | 5 | 4,6 | 5 |
| Loop | | | | | |
| Temperature | °C | 80 | 80 | 85,0 | 85 |
| Split | % | 45 | 44 | 63 | 56 |
| MFR2 | g/10 min | 0,61 | 0,87 | 8,52 | 0,58 |
| XS | % | 2,6 | 2,9 | 2,2 | 2,0 |
| GPR 1 | | | | | |
| Temperature | °C | 95 | 95 | 85 | 95 |
| Split | % | 56 | 56 | 37 | 44 |
| MFR2 | g/10 min | 6,1 | 6,7 | 18,0 | 6,3 |
| XS | % | 2,1 | 2 | 1,0 | 1,5 |
| Pellets | | | | | |
| MFR2 | g/10 min | 6,7 | 8,0 | 18 | 6,4 |
| Zero viscosity | Pa*s | 10158 | 6695 | 1568 | 9778 |
| SHI | | 20,5 | 15,2 | 7,0 | 29,8 |
| PI | | 6,6 | 5,7 | 3,6 | 7,5 |
| Tm | °C | 166,4 | 166,4 | 167,1 | 166,0 |
| Crystallinity | % | 57,5 | 57,0 | 58,1 | 55,9 |
| Tcr | °C | 132,1 | 132,2 | 133,1 | 129,4 |
| | | | | | |
| Tensile Modulus | MPa | 2030 | 2000 | 2070 | 1990 |
| Sttress at yield | MPa | 40,5 | 40,4 | 40,8 | 40,1 |

(continued)

| Pellets | | | | | |
|---|---|---|---|---|---|
| Strain at yield | % | 7,3 | 7,6 | 6,2 | 7,0 |
| Charpy at RT | kJ/m$^2$ | 4,0 | 4,1 | 3 | 3,9 |
| Haze 2 mm plaques | % | 48,0 | 49,0 | 64,0 | 60,0 |
| Gloss 60° | | 80,0 | 83,0 | 76,9 | 85,9 |
| PVCH | ppm | 722 | 677 | 375 | 44 |
| Additives | | | | | |
| Irganox B215 | ppm | 2000 | 2000 | 1500 | 2000 |
| CaSt | ppm | 400 | 400 | 1000 | 400 |

The examples as contained herewith clearly demonstrate that polypropylene compositions in accordance with the present invention show highly satisfactory haze values, so that the claimed improvements have been demonstrated.

**Claims**

1. Polypropylene composition, comprising

   A) at least one propylene homopolymer component, and
   B) a polymeric nucleating agent,

   wherein the mixture of A) and B) has a MFR$_2$ of from 1 to 50 g/10 min as measured according to ISO 1133 (230°C, 2.16 kg load) and a haze, measured in the form of an injection molded test piece having a thickness of 2 mm which satisfies the following relation:

$$\text{Haze (\%)} < 105.7 \cdot N^{(-0.1)} + 13.6 \cdot MFR_2^{0.6} - 1.78 \cdot MFR_2 - 31.7$$

   with
   N = amount of polymeric nucleating agent in the propylene homopolymer in ppm (weight)
   MFR$_2$ = MFR$_2$ of the mixture of A) and B) (ISO 1133, 230°C, 2.16 kg load).

2. Polypropylene composition according to claim 1, wherein the haze is below 50%.

3. Polypropylene composition according to claim 1 or 2, wherein the MFR$_2$ is of 1 to 50 g/10 min, preferably ≤ 25 g/10 min.

4. Polypropylene composition according to any of the preceding claims, wherein the composition has a polydispersity index of ≥ 2.5.

5. Polypropylene composition according to any of claims 1 to 4, wherein the polypropylene composition fulfils furthermore at least one of the following conditions:

   (a) containing no sorbitol derived nucleating agent;
   (b) containing no metal salts of aromatic or aliphatic carboxylic acids and/or
   (c) containing no phosphate salt derived nucleating agent.

6. Polypropylene composition according to any of claims 1 to 5, wherein the polymeric nucleating agent is at least one vinyl cyclohexane polymer.

7. Polypropylene composition according to any of the preceding claims, wherein the polypropylene composition is a reactor made polypropylene composition.

8. Polypropylene composition in accordance with any of the preceding claims, wherein the polypropylene composition has a tensile modulus of below 2500 MPa.

9. Polypropylene composition according to any one of the preceding claims, wherein the propylene homopolymer component has a shear thinning index $SHI_{0/50} > 4$.

10. Polypropylene composition according to any of the preceding claims, wherein the composition is multimodal with respect to the molecular weight distribution.

11. Polypropylene composition according to any one of the preceding claims, wherein the composition is at least bimodal with respect to molecular weight distribution and comprises at least a propylene homopolymer component (a) and at least a propylene homopolymer component (b) with differing MFR.

12. Polypropylene composition according to any one of the preceding claims, wherein the polypropylene composition comprises more than 45 ppm (weight) of the polymeric nucleating agent.

13. Polypropylene composition according to any one of the preceding claims, wherein the polypropylene composition comprises less than 1000 ppm of the polymeric nucleating agent.

14. Process for producing a polypropylene composition according to any one of claims 1 to 13, comprising the step of preparing a propylene homopolymer using a catalyst obtainable by polymerizing a vinyl compound of the formula $CH_2 = CH\text{-}CHR_1R_2$, wherein $R_1$ and $R_2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30alkane, C4-C20cycloalkane or C4-C20aromatic ring, at a weight ratio of the vinyl compound to polymerization catalyst amounting to 3 or more in the presence of said catalyst, until the concentration of unreacted vinyl compound is less than about 0.5 wt%.

15. Process in accordance with claim 14, wherein the polymerization of the vinyl compound is carried out in a medium which does not substantially dissolve the polymerized vinyl compound.

16. Process according to claim 14 or 15, wherein the vinyl compound is vinyl cyclohexane.

17. Process according to any one of claims 14 to 16, wherein the weight ratio of the vinyl compound to the catalyst amounts to from 3.5 to 50.

18. Process in accordance with any one of the preceding claims 14 to 17, wherein the propylene homopolymer is prepared in a reactor cascade comprising at least one loop reactor and at least one gas phase reactor, in any order.

19. Use of the polypropylene composition according to any of claims 1 to 13 or obtained in accordance with the process of any one of claims 14 to 18, for preparing films or thermoformed articles.

**Patentansprüche**

1. Polypropylenzusammensetzung, umfassend

 A) wenigstens eine Propylenhomopolymerkomponente, und
 B) ein polymeres Nukleierungsmittel,

 wobei die Mischung aus A) und B) eine $MFR_2$ von 1 bis 50 g/10 min, gemessen gemäß ISO 1133 (230 °C, 2,16 kg Last) und eine Trübung, gemessen in Form eines spritzgegossenen Prüfkörpers mit einer Dicke von 2 mm, aufweist, welche der folgenden Beziehung entspricht:

$$\text{Trübung (\%)} < 105{,}7 \cdot N^{(-0{,}1)} + 13{,}6 \cdot MFR_2^{0{,}6} - 1{,}78 \cdot MFR_2 - 31{,}7$$

wobei
N = Menge an polymerem Nukleierungsmittel in dem Propylenhomopolymer in ppm (Gewicht)
$MFR_2$ = $MFR_2$ der Mischung aus A) und B) (ISO 1133, 230 °C, 2,16 kg Last).

2. Polypropylenzusammensetzung nach Anspruch 1, wobei die Trübung unter 50 % liegt.

3. Polypropylenzusammensetzung nach Anspruch 1 oder 2, wobei die $MFR_2$ 1 bis 50 g/10 min, vorzugsweise ≤ 25 g/10 min beträgt.

4. Polypropylenzusammensetzung nach einem der vorangehenden Ansprüche, wobei die Zusammensetzung einen Polydispersitätsindex von ≥ 2,5 aufweist.

5. Polypropylenzusammensetzung nach einem der Ansprüche 1 bis 4, wobei die Polypropylenzusammensetzung außerdem wenigstens eine der folgenden Bedingungen erfüllt:

   (a) sie enthält kein von Sorbitol abgeleitetes Nukleierungsmittel;
   (b) sie enthält keine Metallsalze von aromatischen oder aliphatischen Carbonsäuren und/oder
   (c) sie enthält kein von einem Phosphatsalz abgeleitetes Nukleierungsmittel.

6. Polypropylenzusammensetzung nach einem der Ansprüche 1 bis 5, wobei das polymere Nukleierungsmittel wenigstens ein Vinylcyclohexanpolymer ist.

7. Polypropylenzusammensetzung nach einem der vorangehenden Ansprüche, wobei die Polypropylenzusammensetzung eine im Reaktor hergestellte Polypropylenzusammensetzung ist.

8. Polypropylenzusammensetzung nach einem der vorangehenden Ansprüche, wobei die Polypropylenzusammensetzung einen Zugmodul unter 2500 MPa aufweist.

9. Polypropylenzusammensetzung nach einem der vorangehenden Ansprüche, wobei die Propylenhomopolymerkomponente einen Scherentzähungsindex $SHI_{0/50}$ > 4 aufweist.

10. Polypropylenzusammensetzung nach einem der vorangehenden Ansprüche, wobei die Zusammensetzung multimodal im Hinblick auf die Molekulargewichtsverteilung ist.

11. Polypropylenzusammensetzung nach einem der vorangehenden Ansprüche, wobei die Zusammensetzung wenigstens bimodal im Hinblick auf die Molekulargewichtsverteilung ist und wenigstens eine Propylenhomopolymerkomponente (a) und wenigstens eine Propylenhomopolymerkomponente (b) mit unterschiedlichen MFR umfasst.

12. Polypropylenzusammensetzung nach einem der vorangehenden Ansprüche, wobei die Polypropylenzusammensetzung mehr als 45 ppm (Gewicht) des polymeren Nukleierungsmittels umfasst.

13. Polypropylenzusammensetzung nach einem der vorangehenden Ansprüche, wobei die Polypropylenzusammensetzung weniger als 1000 ppm des polymeren Nukleierungsmittels umfasst.

14. Verfahren zum Herstellen einer Polypropylenzusammensetzung nach einem der Ansprüche 1 bis 13, umfassend den Schritt des Herstellens eines Propylenhomopolymers unter Verwendung eines Katalysators, der erhältlich ist durch Polymerisieren einer Vinylverbindung der Formel $CH_2 = CH\text{-}CHR_1R_2$, worin $R_1$ und $R_2$, zusammen mit dem Kohlenstoffatom, an das sie gebunden sind, einen gegebenenfalls substituierten gesättigten oder ungesättigten oder aromatischen Ring oder ein kondensiertes Ringsystem bilden, wobei der Ring oder die kondensierte Ringeinheit 4 bis 20 Kohlenstoffatome enthält, vorzugsweise einen 5- bis 12-gliedrigen gesättigten oder ungesättigten oder aromatischen Ring oder ein kondensiertes Ringsystem, oder unabhängig voneinander ein lineares oder verzweigtes C4-C30-Alkan, C4-C20-Cycloalkan oder einen aromatischen C4-C20-Ring bedeuten, mit einem Gewichtsverhältnis der Vinylverbindung zu dem Polymerisationskatalysator von 3 oder mehr, in Gegenwart des Katalysators, bis die Konzentration der nicht umgesetzten Vinylverbindung weniger als ungefähr 0,5 Gew.-% beträgt.

**15.** Verfahren nach Anspruch 14, wobei die Polymerisation der Vinylverbindung in einem Lösungsmittel durchgeführt wird, welches die polymerisierte Vinylverbindung im Wesentlichen nicht auflöst.

**16.** Verfahren nach Anspruch 14 oder 15, wobei die Vinylverbindung Vinylcyclohexan ist.

**17.** Verfahren nach einem der Ansprüche 14 bis 16, wobei das Gewichtsverhältnis der Vinylverbindung zu dem Katalysator 3,5 bis 50 beträgt.

**18.** Verfahren nach einem der vorangehenden Ansprüche 14 bis 17, wobei das Propylenhomopolymer in einer Reaktorkaskade hergestellt wird, die wenigstens einen Schleifenreaktor und wenigstens einen Gasphasenreaktor in einer beliebigen Reihenfolge umfasst.

**19.** Verwendung der Polypropylenzusammensetzung nach einem der Ansprüche 1 bis 13 oder erhalten gemäß dem Verfahren nach einem der Ansprüche 14 bis 18, zum Herstellen von Filmen oder warmgeformten Artikeln.

**Revendications**

**1.** Composition de polypropylène comprenant

A) au moins un composant homopolymère de propylène, et
B) un agent de nucléation polymère,

dans laquelle le mélange de A) et B) a un $MFR_2$ de 1 à 50 g/10 min tel que mesuré conformément à la norme ISO 1133 (230°C, charge 2,16 kg) et un voile, mesuré sous la forme d'une éprouvette moulée par injection d'une épaisseur de 2 mm, qui satisfait la relation suivante :

$$\text{Voile (\%)} < 105,7 \cdot N^{(-0,1)} + 13,6 \cdot MFR_2^{0,6} - 1,78 \cdot MFR_2 - 31,7$$

avec
N = quantité d'agent de nucléation polymère dans l'homopolymère de propylène en ppm (en poids)
$MFR_2$ = $MFR_2$ du mélange de A) et B) (ISO 1133, 230°C, charge 2,16 kg).

**2.** Composition de polypropylène selon la revendication 1, dans laquelle le voile est inférieur à 50 %.

**3.** Composition de polypropylène selon la revendication 1 ou 2, dans laquelle le $MFR_2$ est de 1 à 50 g/10 min, de préférence $\leq$ 25 g/10 min.

**4.** Composition de polypropylène selon l'une quelconque des revendications précédentes, laquelle composition a un indice de polydispersité $\geq$ 2,5.

**5.** Composition de polypropylène selon l'une quelconque des revendications 1 à 4, laquelle composition de polypropylène satisfait en outre au moins l'une des conditions suivantes :

(a) elle ne contient pas d'agent de nucléation dérivant de sorbitol ;
(b) elle ne contient pas de sels métalliques d'acides carboxyliques aromatiques ou aliphatiques et/ou
(c) elle ne contient pas d'agent de nucléation dérivant de sel phosphate.

**6.** Composition de polypropylène selon l'une quelconque des revendications 1 à 5, dans laquelle l'agent de nucléation polymère est au moins un polymère de vinylcyclohexane.

**7.** Composition de polypropylène selon l'une quelconque des revendications précédentes, laquelle composition de polypropylène est une composition de polypropylène produite dans un réacteur.

**8.** Composition de polypropylène selon l'une quelconque des revendications précédentes, laquelle composition de polypropylène a un module de tension inférieur à 2500 MPa.

**9.** Composition de polypropylène selon l'une quelconque des revendications précédentes, dans laquelle le composant homopolymère de propylène a un indice de fluidification par cisaillement $SHI_{0/50} > 4$.

**10.** Composition de polypropylène selon l'une quelconque des revendications précédentes, laquelle composition est multimodale en ce qui concerne la distribution des masses moléculaires.

**11.** Composition de polypropylène selon l'une quelconque des revendications précédentes, laquelle composition est au moins bimodale en ce qui concerne la distribution des masses moléculaires et comprend au moins un composant homopolymère de propylène (a) et au moins un composant homopolymère de propylène (b) ayant des MFR différents.

**12.** Composition de polypropylène selon l'une quelconque des revendications précédentes, laquelle composition de polypropylène comprend plus de 45 ppm (en poids) de l'agent de nucléation polymère.

**13.** Composition de polypropylène selon l'une quelconque des revendications précédentes, laquelle composition de polypropylène comprend moins de 1000 ppm de l'agent de nucléation polymère.

**14.** Procédé pour produire une composition de polypropylène selon l'une quelconque des revendications 1 à 13, comprenant l'étape de préparation d'un homopolymère de propylène en utilisant un catalyseur pouvant être obtenu par polymérisation d'un composé de vinyle de formule $CH_2=CH-CHR_1R_2$, dans laquelle $R_1$ et $R_2$, conjointement avec l'atome de carbone auquel ils sont rattachés, forment un cycle saturé ou insaturé ou aromatique éventuellement substitué ou un système cyclique condensé, le fragment cyclique ou cyclique condensé contenant de quatre à 20 atomes de carbone, de préférence un cycle saturé ou insaturé ou aromatique, ayant de 5 à 12 chaînons, ou un système cyclique condensé, ou représentent indépendamment un alcane en $C_4$ à $C_{30}$ linéaire ou ramifié, un cycloalcane en $C_4$ à $C_{20}$ ou un cycle aromatique en $C_4$ à $C_{20}$, le rapport en poids du composé de vinyle sur le catalyseur de polymérisation étant de 3 ou plus en présence dudit catalyseur, jusqu'à ce que la concentration de composé de vinyle n'ayant pas réagi soit inférieure à environ 0,5 % en poids.

**15.** Procédé selon la revendication 14, dans lequel la polymérisation du composé de vinyle est mise en oeuvre dans un milieu qui ne dissout pratiquement pas le composé de vinyle polymérisé.

**16.** Procédé selon la revendication 14 ou 15, dans lequel le composé de vinyle est le vinylcyclohexane.

**17.** Procédé selon l'une quelconque des revendications 14 à 16, dans lequel le rapport en poids du composé de vinyle sur le catalyseur est de 3,5 à 50.

**18.** Procédé selon l'une quelconque des revendications précédentes 14 à 17, dans lequel l'homopolymère de propylène est préparé dans une cascade de réacteurs comprenant au moins un réacteur en boucle et au moins un réacteur en phase gazeuse, dans un ordre quelconque.

**19.** Utilisation de la composition de polypropylène selon l'une quelconque des revendications 1 à 13 ou obtenue conformément au procédé de l'une quelconque des revendications 14 à 18, pour la préparation de films ou d'objets thermoformés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1514893 A1
- WO 9924478 A
- WO 9924479 A
- EP 0316187 A2
- WO 2004055101 A
- US 4551501 A
- WO 2005026240 A
- US 4603174 A

- EP 0887379 A1
- EP 517868 A1
- US 5234879 A
- WO 9219653 A
- WO 9219658 A
- WO 9933843 A
- WO 0068315 A
- FI 88047

**Non-patent literature cited in the description**

- Rheological characterization of polyethylene fractions. *Finland. Theor. Appl. Rheol., Proc. Int. Congr. Rheol.,* 1992, vol. 1, 360-362

- **HEINO, EEVA-LEENA.** The influence of molecular structure on some rheological properties of polyethylene. *Annual Transactions of the Nordic Rheology Society,* 1995